(19) Europäisches Patentamt
European Patent Office
Office européen des brevets

(11) **EP 3 670 700 A1**

(12) **EUROPEAN PATENT APPLICATION**

(43) Date of publication:
**24.06.2020 Bulletin 2020/26**

(51) Int Cl.:
**C25B 1/00** (2006.01)          **C25B 1/04** (2006.01)
**C25B 11/04** (2006.01)          **C25D 3/02** (2006.01)

(21) Application number: **18306750.3**

(22) Date of filing: **19.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Paris Sciences et Lettres - Quartier Latin**
  **75006 Paris (FR)**
• **College de France**
  **75005 Paris (FR)**

(72) Inventors:
• **FONTECAVE, Marc**
  **38330 SAINT ISMIER (FR)**
• **MOUGEL, Victor**
  **8046 ZURICH (CH)**
• **TRAN NGOC, Huan**
  **92160 ANTONY (FR)**
• **WAKERLEY, David**
  **75004 PARIS (FR)**
• **LAMAISON, Sarah**
  **64500 SAINT JEAN-DE-LUZ (FR)**

(74) Representative: **Regimbeau**
  **20, rue de Chazelles**
  **75847 Paris Cedex 17 (FR)**

(54) **METHOD FOR CONVERTING CARBON DIOXIDE (CO2) INTO SYNGAS BY AN ELECTROLYSIS REACTION**

(57)     The present invention relates to a method for $CO_2$ electroreduction to syngas, a mixture of carbon monoxide (CO) and hydrogen ($H_2$), using a cathode comprising an electrically conductive support of which at least a part of the surface is covered by a metal deposit of zinc and of a second metal selected from copper, silver, gold and mixtures thereof, and being preferably copper, said metal deposit comprising at least 1 wt% of one or several phases of an alloy of zinc and of the second metal.

The present invention relates also to an electrode useful for performing this method, a process for preparing such an electrode and an electrolysis device comprising such an electrode.

EP 3 670 700 A1

**Description**

**TECHNICAL FIELD**

The present invention relates to a method for $CO_2$ electroreduction to syngas, a mixture of carbon monoxide (CO) and hydrogen ($H_2$), using a cathode comprising an alloy of zinc and a second metal selected from copper, silver, gold and mixtures thereof, as well as to an electrode useful for performing this method, a process for preparing such an electrode and an electrolysis device comprising such an electrode.

**BACKGROUND**

Currently, most of the energy demand is satisfied by the massive use of fossil fuels. There is thus a need for increasing the use of renewable energies, as well for developing cost-effective technologies able to store these energies in the form of valuable products such as hydrocarbons or alcohols.

Electroreduction of $CO_2$ into energy-dense compounds such as carbon monoxide, formic acid, hydrocarbons and alcohols offers a promising route to store intermittent renewable energies. Multi-carbon products (ethanol, ethylene, propanol, etc.) are the most valued outcome of such a process, representing a denser store of chemical energy. However, the multi-electronic and multi-protonic nature of the reactions at work commonly results in very high overpotential, low faradaic efficiency and complex product mixtures. This process is commonly carried out in aqueous media, with the anodic oxidation of water providing the source of protons and electrons. Yet, the use of aqueous electrolyte is highly challenging considering the kinetically and thermodynamically facile alternative reduction of $H^+$ to $H_2$. While significant efforts are currently being made to develop electrocatalysts promoting the direct $CO_2$ reduction to hydrocarbons or alcohols with limited activity for $H^+$ reduction, an equally attractive strategy is to take advantage of the produced $H_2$ to generate valuable gas mixtures, such as syngas, a combination of CO and $H_2$.

Syngas can be used to produce hydrocarbons and alcohols through well-established industrial technologies. A two-step process that couples $CO_2$ electroreduction to syngas with its subsequent transformation to high added-value products has been proposed to be more favorable from an economic perspective since i) $CO_2$ reduction to CO occurs at moderate overpotentials and ii) a highly energy-demanding product separation step is not required (Foit et al. Angew. Chem. Int. Ed. 2017, 56, 5402-5411).

However, one of the main prerequisites for the syngas generated is control over the $H_2$:CO ratio, that must meet different values depending on the reaction targeted: optimal $H_2$:CO ratios of 1.5-2.2 are typically required for methanol synthesis and the Fischer-Tropsch reaction; 3 for the methanation reaction; and 1 is typically required for hydroformylation and fine chemical synthesis (Foit et al. Angew. Chem. Int. Ed. 2017, 56, 5402-5411).

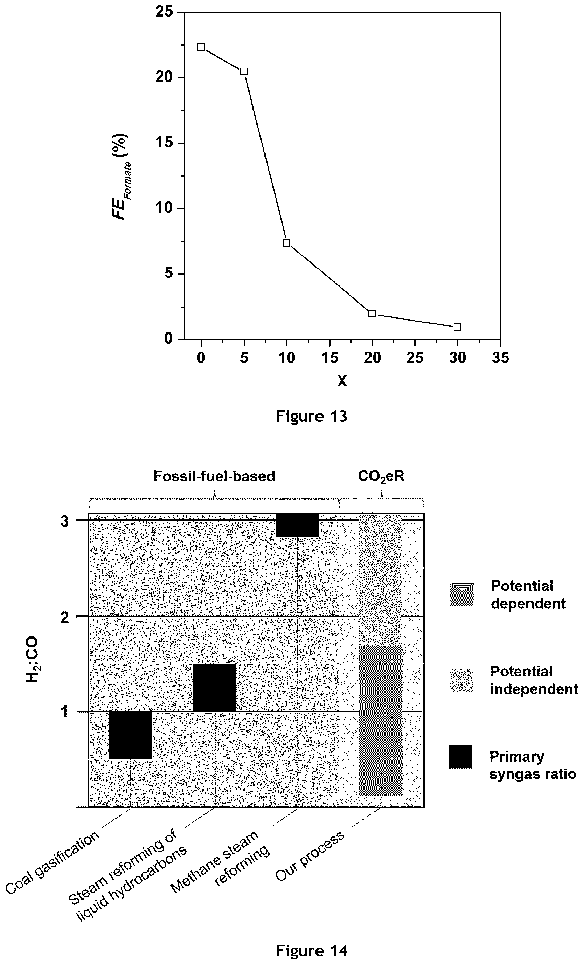

Currently, the production of syngas is mainly based on fossil-fuel reforming reactions such as steam methane reforming (50%), partial oxidation of oil (30%) or coal gasification (18%) and requires extreme industrial conditions such as elevated temperatures and pressures, which are costly and unsustainable (Iulianelli et al. Catalysis Reviews 2016, 58, 1-35, doi:10.1080/01614940.2015.1099882). However, these processes generate specific $H_2$:CO ratios (Figure 14) and are based on non-renewable feedstocks. Adjusting these ratios requires an additional energy-demanding water-gas-shift reaction (Foit et al. Angew. Chem. Int. Ed. 2017, 56, 5402-5411).

In this context, electrochemical syngas generation is a more versatile and sustainable alternative, allowing a broad range of $H_2$:CO ratios to be produced from renewable precursors ($H_2O$ and $CO_2$) (Francke et al. Chem. Rev. 2018, 118, 4631-4701; Zheng et al. Adv. Mat. 2018, doi:10.1002/adma.201802066). The electrochemical conversion of $CO_2$ to syngas is particularly relevant in the context of renewable electricity conversion, which requires the design of electrolytic devices tolerant to the significant variations of power provided by intermittent energy sources, such as photovoltaic panels, as syngas conversion requires the $H_2$:CO ratio to be constant for optimal further transformation. Nevertheless, to the best of our knowledge all the electrocatalytic systems for syngas generation present a significant variation of the $H_2$:CO ratio with applied potential, preventing an efficient coupling with such sources of electricity.

Previous reports have focused on monometallic molecular (Elgrishi et al. Chem. Sci. 2015, 6, 2522-2531; Kang et al. Energy Environ. Sci. 2014, 7, 4007-4012; Wang et al. ACS Catal. 2018, 8, 7612-7620) and heterogeneous catalytic systems (Lv et al. Adv. Funct. Mater. 2018, doi:10.1002/adfm.201802339; Marques Mota et al. ACS Catal. 2018, 8, 4364-4374; Mistry et al. J. Am. Chem. Soc. 2014, 136, 16473-16476; Nguyen et al. ACS Sustain. Chem. Eng. 2017, 5, 11377-11386; Qin et al. ACS Appl. Mater. Interfaces 2018, 10, 20530-20539; Ross et al. J. Am. Chem. Soc. 2017, 139, 9359-9363; Sheng et al. Energy Environ. Sci. 2017, 10, 1180-1185; Urbain et al. Energy Environ. Sci. 2017, 10, 2256-2266; He et al. Adv. Mat. 2018, 30, 1705872), showing simultaneous CO and $H_2$ production. Most of these catalysts use gold, silver or zinc (the main metals capable of selectively catalyzing the reduction of $CO_2$ and $H^+$ in CO and $H_2$ predominantly - Hori, Y. in Modern Aspects of Electrochemistry (eds Constantinos G. Vayenas, Ralph E. White, & Maria E. Gamboa-Aldeco) 89-189 (Springer New York, 2008)) or complex structures based on toxic and expensive metals such as palladium or cadmium. However, none of these catalysts can provide an $H_2$:CO ratio independent of the electrolysis potential over a wide range of potentials making their coupling to intermittent sources of energy difficult.

Catalytic systems based on Cu and Zn have also been reported in the art but they aim to the production of ethanol (Ren et al. ACS Catal. 2016, 6, 8239-8247) and to the production of CO only (Moreno-Garcia et al. ACS Appl. Mater. Interfaces 2018, 10, 31355-31365). These differences of behavior are due to the use of different deposition regimes to prepare the catalytic systems leading to catalytic material having different chemical compositions and different structures.

There exists thus a need for a more effective syngas generating system through $CO_2$ electroreduction technologies satisfying the following parameters:

- a modulation of the $H_2$:CO ratio which is not depend on the potential applied;
- an ability to operate in a regime where the current is not limited by the diffusion of reactants ($CO_2$ is present in a very low concentration in aqueous solutions and therefore a system maximizing reactant mass transfer is important);
- a selectivity for syngas production only, *i.e.* the typical concomitant formation of formic acid must be minimized, so that the formed syngas can be directly recoverable;
- the use of a catalytic material comprising non-noble metals which are abundant and non-toxic.

**SUMMARY OF THE INVENTION**

The present invention thus relates to a method for converting carbon dioxide ($CO_2$) into syngas, which is a mixture of carbon monoxide (CO) and hydrogen ($H_2$), comprising the following steps:

a) providing an electrolysis device comprising an anode and a cathode, wherein said cathode comprises an electrically conductive support of which at least a part of the surface is covered by a metal deposit of zinc and of a second metal selected from copper, silver, gold and mixtures thereof, and being preferably copper, said metal deposit comprising at least 1 wt% of one or several phases of an alloy of zinc and of the second metal;

b) exposing the cathode of said electrolysis device to a $CO_2$-containing aqueous catholyte solution;

c) applying an electrical current between the anode and the cathode in order to reduce the carbon dioxide into syngas.

The use of a cathode comprising, as catalytic material, a metal deposit of zinc and of a second metal, such as copper, as defined above (i.e. comprising one or several phases of an alloy of zinc and of the second metal) allows $CO_2$ electroreduction into syngas, a mixture of CO and $H_2$. No other gaseous products are obtained so that the formed syngas can be directly used, for example for hydroformylation, in a Fischer-Tropsch reaction or for methanol synthesis. Moreover, the mixture of CO and $H_2$ represents at least 80% of the total products formed.

The selectivity of the catalytic material according to the invention differs from both Cu-based catalysts (typically producing multi-carbon products) and Zn-based catalysts (typically producing CO and formic acid) (Y. Hori, in Modern Aspects of Electrochemistry (Eds.: C. G. Vayenas, R. E. White, M. E. Gamboa-Aldeco), Springer New York, New York, NY, 2008, pp. 89-189).

The $H_2$/CO ratio in the obtained syngas depends on the Zn/second metal ratio incorporated in the catalytic material, the content of $H_2$ increasing with the content of the second metal such as copper. Moreover, for zinc/second metal weight ratios comprised between 99/1 and 35/65, the obtained $H_2$/CO ratio is substantially not dependent on the applied potential over a range of at least 300 mV, so that the electrolysis device can be coupled to an intermittent source of energy, and allows obtaining a broad range of $H_2$:CO ratios from 0.2 to 1.6. The flexible nature of the $H_2$:CO ratio is essential for the downstream transformation of syngas via known industrial processes and the invariance of this ratio over a wide range of potentials allows the coupling of the electrolysis device to a source of intermittent energy (e.g. photovoltaic panels).

Higher $H_2$:CO ratios (up to 3.65) can be obtained when using a catalytic material with a higher second metal loading, yet losing the invariance of the $H_2$:CO ratio with applied potential observed at lower loadings (Figure 14).

In addition, the formation of formic acid as secondary product is decreased, in particular with increased amounts of the second metal such as copper. In the same way, the formation of multi-carbon products has not been observed. Thus, the combination of Zn and the second metal in the form of an alloy in the catalytic material synergistically increases the selectivity of this catalytic material, by essentially 'turning off' the secondary reactions of each metals.

Furthermore, the cathode shows a remarkable stability over time. Indeed, stable currents and selectivity were observed over >3 h constant potential electrolysis. It has been shown also that the composition and nanoscale morphology of the catalytic material are preserved during electrolysis.

The present invention relates also to an electrode comprising an electrically conductive support of which at least a part of the surface is covered by a metal deposit of zinc and of a second metal selected from copper, silver, gold and mixtures thereof, and being preferably copper,

wherein said metal deposit comprises at least 1 wt% of one or several phases of an alloy of zinc and of the second metal and has a specific surface area greater than or equal to 0.1 $m^2.g^{-1}$.

The invention relates also to a process for preparing such an electrode, as well as to an electrolysis device comprising such an electrode.

**DEFINITIONS**

By "syngas" is meant a mixture of carbon monoxide (CO) and hydrogen ($H_2$).

For the purposes of the present invention, the term "electrolysis device", also called "electrolyzer", is intended to mean a device for converting electrical energy, in particular renewable electrical energy, into chemical energy.

By "electrode" is meant in the sense of the present invention an electronic conductor capable of capturing or releasing electrons. The electrode that releases electrons is called an "anode". The electrode that captures electrons is called a "cathode". Thus, an oxidation reaction occurs at the anode, whereas a reduction reaction occurs at the cathode.

By "electrolyte solution" is meant, in the present invention, a solution, preferably an aqueous solution, in which a substance is dissolved so that the solution becomes electrically conductive. This substance is named "electrolyte". A "catholyte solution" is an "electrolyte solution" used at the cathode. A "anolyte solution" is an "electrolyte solution" used at the anode.

For the purposes of the present invention, the term "electrically conductive support" means a support capable of conducting electricity.

Within the meaning of the invention, "immersed" in a solution/fluid means that the electrode is plunged into the solution/fluid at least partially.

By "phase of an alloy of zinc and of the second metal" is meant a homogeneous phase comprising zinc and the second metal. When the second metal is copper, each alloy phase can have for example the following composition: $Cu_3Zn$, $Cu_5Zn_8$ or $Cu_{0.2}Zn_{0.8}$.

By "homogeneous phase" is meant a phase for which the composition is substantially the same in any point of the phase.

By "specific surface area" of the metal deposit is meant the specific surface area of the metal deposit determined by BET. More particularly, the specific surface area can be determined by BET analysis based on Kr sorption isotherms measured for instance on a BelSorp Max set-up at 77 K.

By a $H_2$/CO ratio "substantially not dependent on the applied potential" is meant that, for a range of applied potentials (e.g. between -0.6 V vs RHE and -1.4 V vs RHE, notably between -0.7 V vs RHE and -1.2 V vs RHE, preferably between -0.8 V vs RHE and -1.1 V vs RHE) to the cathode, the syngas is obtained with a $H_2$/CO ratio value having a relative standard deviation (RSD) equal or below 30%, notably equal or below 25%, preferably equal or below 20%.

**DETAILED DESCRIPTION**

Method for converting $CO_2$ into syngas

The method according to the present invention for converting carbon dioxide ($CO_2$) into syngas comprises the following steps:

a) providing an electrolysis device comprising an anode and a cathode, wherein said cathode comprises an electrically conductive support of which at least a part of the surface is covered by a metal deposit of zinc and of a second metal selected from copper, silver, gold and mixtures thereof, and being preferably copper, said metal deposit comprising at least 1 wt% of one or several phases of an alloy of zinc and of the second metal;
b) exposing the cathode of said electrolysis device to a $CO_2$-containing aqueous catholyte solution;
c) applying an electrical current between the anode and the cathode in order to reduce the carbon dioxide into syngas.

• *Step (a)*

The electrolysis device used in the method of the present invention comprises an anode and a cathode.

The cathode of the electrolysis device comprises an electrically conductive support of which at least a part of the surface is covered by a metal deposit of zinc and of a second metal selected from copper, silver, gold and mixtures thereof, and preferably being copper, said metal deposit comprising at least 1 wt% of one or several phases of an alloy of zinc and of the second metal.

The electrically conductive support will comprise or consist of an electrically conductive material which may be a composite material consisting of several distinct electroconductive materials. The electrically conductive material may be chosen in particular from a metal such as copper, steel, aluminum, zinc or titanium; a metal oxide such as Fluorine-doped Titanium Oxide (FTO) or Indium Tin Oxide (ITO); a metal sulphide such as cadmium sulphide or zinc sulphide;

carbon in particular in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use. For example, it can be in the form of a sheet, a foil, a plate, a mesh, or a foam.

The surface of such a support is at least partially covered by the metal deposit. Advantageously, at least 5%, in particular at least 20%, especially at least 50%, preferably at least 80%, of the surface of the support is covered by the metal deposit. According to a particular embodiment, the entire surface of the support is covered by the metal deposit.

The metals, i.e. zinc and the second metal such as copper, is advantageously deposited on the support by electrodeposition.

The metal deposit comprises at least 1 wt%, notably at least 5 wt%, in particular at least 10 wt%, for example at least 20 wt%, such as at least 30 wt% of one or several phases of an alloy of zinc and of the second metal. The metal deposit can consist of 100 wt% of one or several phases of an alloy of zinc and of the second metal.

The presence of one or several phases of an alloy of zinc and of the second metal and its/their amount can be determined by X-ray diffraction.

The metal deposit advantageously has a thickness of between 1 $\mu$m and 250 $\mu$m, notably between 5 $\mu$m and 250 $\mu$m, preferably between 5 and 200 $\mu$m.

Such a thickness can be measured in particular by measuring a sample cut by Scanning Electron Microscopy (SEM), for example using a scanning electron microscope Hitachi S-4800.

The metal deposit has a specific surface area of at least 0.1 $m^2.g^{-1}$, notably at least 0.5 $m^2.g^{-1}$, such as at least 1 $m^2.g^{-1}$. In particular, the metal deposit has a specific surface area for example comprised between 0.1 and 500 $m^2.g^{-1}$, notably between 0.5 and 200 $m^2.g^{-1}$, in particular between 1 and 100 $m^2.g^{-1}$, preferably between 1 and 50 $m^2.g^{-1}$.

The metal deposit will also advantageously have a porous structure.

The metal deposit will advantageously have a porosity with an average pore size of between 1 $\mu$m and 500 $\mu$m, in particular between 1 $\mu$m and 200 $\mu$m, preferably between 20 $\mu$m and 100 $\mu$m.

The average pore size can be determined by means of images obtained by Scanning Electron Microscopy (SEM) or Scanning Tunneling Microscopy (STM), preferably by Scanning Electron Microscopy (SEM), for example using a scanning electron microscope Hitachi S-4800.

The anode may be any electrode traditionally used in the art as anode and with which the skilled person is well familiar. Such an anode may be made of for example platinum, cobalt, copper, etc. in metallic or oxide form.

The cathode and the electrolysis device can be as defined below (cf. 'electrode' and 'electrolysis device' parts below). In particular, the cathode can be prepared as defined below (cf. 'preparation of the electrode' part).

• _Step (b)_

The cathode of the electrolysis device will be exposed to a $CO_2$-containing aqueous catholyte solution. More particularly, the cathode will be immersed in such a catholyte solution. More particularly, the part of the cathode covered with the metal deposit must be at least partially, preferably completely, immersed into the catholyte solution.

Preferably, the aqueous solution is saturated with $CO_2$, notably by bubbling the $CO_2$ gas directly into the solution.

Advantageously, the catholyte solution comprises a salt of hydrogen carbonate ($HCO_3^-$), such as an alkali metal salt or a quaternary ammonium salt of hydrogen carbonate. The alkali metal can be potassium, sodium or cesium, preferably cesium. The quaternary ammonium can have the formula $NR_1R_2R_3R_4^+$ wherein $R_1$, $R_2$, $R_3$ and $R_4$, identical or different, preferably identical, are a $(C_{1-6})$alkyl, such as methyl or ethyl. The quaternary ammonium can be in particular a tetramethylammonium or a tetraethylammonium. Preferably the salt of hydrogen carbonate is $CsHCO_3$. It should be noted that the continuous $CO_2$ bubbling in the catholyte solution allows regenerating the diffused bicarbonate anions.

The concentration of the salt of hydrogen carbonate advantageously is below 1 M, notably below 0.5M. It can be comprised between 0.01 M and 0.5 M, notably between 0.05 M and 0.2 M. For example, it can be about 0.1 M.

The catholyte solution is advantageously prepared using deionized water to better control the ionic composition of the solution.

In the same way, the anode of the electrolysis device will be exposed to an anolyte fluid, such as an anolyte solution. More particularly, the anode will be immersed in this anolyte fluid.

The catholyte solution and the anolyte solution may be the same solution so that the anode and the cathode are exposed to / immersed in the same solution. If the anode and cathode are not exposed to the same fluid, the catholyte solution and the anolyte fluid may be separated for example by an ion (e.g. proton) exchange, osmotic or dialysis membrane in order to allow charges or solvent molecules to pass from one fluid to another.

Advantageously, the anolyte fluid is an aqueous anolyte solution. In this case, the anolyte aqueous solution advantageously comprises a salt of carbonate ($CO_3^{2-}$), such as an alkali metal salt or a quaternary ammonium salt of hydrogen carbonate. The alkali metal can be potassium, sodium or cesium, preferably cesium. The quaternary ammonium can be as defined above and have the formula $NR_1R_2R_3R_4^+$ wherein $R_1$, $R_2$, $R_3$ and $R_4$, identical or different, preferably identical, are a $(C_{1-6})$alkyl, such as methyl or ethyl. The quaternary ammonium can be in particular a tetramethylammonium or a tetraethylammonium. Alternatively, the quaternary ammonium can be a tetraalkylated cyclic imidazolium of the formula 1-$R_1$-2-$R_2$-4-$R_3$-5-$R_4$ imidazolium, wherein $R_1$, $R_2$, $R_3$ and $R_4$, identical or different, preferably identical, are a $(C_{1-6})$alkyl, such as methyl or ethyl. Preferably the salt of carbonate is $Cs_2CO_3$.

The concentration of the salt of carbonate advantageously is below 1 M, notably below 0.5 M. It can be comprised between 0.01 M and 0.5 M, notably between 0.05 M and 0.2 M. For example, it can be about 0.1 M.

The anolyte aqueous solution is advantageously prepared using deionized water to better control the ionic composition of the solution.

• *Step (c)*

When the electrical current is applied between the anode and the cathode of the electrolysis device, reduction of carbon dioxide ($CO_2$) and water ($H_2O$) into syngas (CO and $H_2$) occurs at the cathode according to the following half-reactions respectively:

- 

$$CO_2 + H_2O + 2e^- \rightarrow CO + 2\ OH^-$$

- 

$$2\ H_2O + 2\ e^- \rightarrow H_2 + 2\ OH^-$$

and oxidation reaction(s) occur(s) at the anode. The nature of the oxidation reaction(s) will depend notably on the nature of the anolyte fluid and of the anode.

As indicated previously, no other gaseous products are formed at the cathode. Moreover, the $H_2$/CO ratio in the obtained syngas mixture depends on the Zn/second metal (e.g. Cu) ratio in the metal deposit, with the content in $H_2$ increasing with the content of the second metal.

The current applied between the two electrodes will depend on the nature of the anode. This current can be determined by the one skilled in the art based on the fact that the potential applied between the cathode according to the present invention and a reversible hydrogen electrode (RHE) as reference electrode must be between -0.6 V vs RHE and -1.4 V vs RHE, notably between -0.7 V vs RHE and -1.2 V vs RHE and preferably between -0.8 V vs RHE and -1.1 V vs RHE.

According to a first preferred embodiment, the weight ratio zinc/second metal (e.g. Cu) in the metal deposit is comprised between 99/1 and 35/65, notably between 95/5 and 40/60. In this case, the obtained $H_2$/CO ratio is substantially not dependent on the applied potential, so that the syngas composition is a characteristic of the metal deposit composition. The $H_2$:CO ratio can vary from 0.2 to 1.6.

According to a second embodiment, the weight ratio zinc/second metal in the metal deposit is less than 35/65 and notably is comprised between 1/99 and 35/65. In this case, higher $H_2$:CO ratios (up to 3.65) can be obtained but this $H_2$:CO ratio will depend on the applied potential.

The obtained syngas can then be converted into saturated or unsaturated hydrocarbons, alcohols and/or aldehydes, for example by a Fischer-Tropsch reaction, a methanol synthesis, a methanation reaction, a hydroformylation or a syngas fermentation (e.g. by means of enzymes). These methods are well-known to the one-skilled in the art.

The performed reaction will depend on the $H_2$:CO ratio in the obtained syngas or more exactly, the $H_2$:CO ratio of the obtained syngas (and thus the weight ratio of zinc/second metal in the metal deposit) will be chosen in view of the targeted reaction of conversion of the syngas. For example, optimal $H_2$:CO ratios of 1.5-2.2 are typically required for methanol synthesis and the Fischer-Tropsch reaction; 3 for the methanation reaction; and 1 is typically required for hydroformylation.

Electrode

An electrode according to the present invention comprises an electrically conductive support of which at least a part of the surface is covered by a metal deposit of zinc and of a second metal selected from copper, silver, gold and mixtures thereof, and preferably being copper,
wherein said metal deposit comprises at least 1 wt% of one or several phases of an alloy of zinc and of the second metal and has a specific surface area greater than or equal to 0.1 $m^2.g^{-1}$.

The electrically conductive support will comprise or consist of an electrically conductive material which may be a composite material consisting of several distinct electroconductive materials. The electrically conductive material may be chosen in particular from a metal such as copper, steel, aluminum, zinc or titanium; a metal oxide such as Fluorine-doped Titanium Oxide (FTO) or Indium Tin Oxide (ITO); a metal sulphide such as cadmium sulphide or zinc sulphide; carbon in particular in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use. For example, it can be in the form of a sheet, a foil, a plate, a mesh, or a foam.

The surface of such a support is at least partially covered by the metal deposit. Advantageously, at least 5%, in particular at least 20%, especially at least 50%, preferably at least 80%, of the surface of the support is covered by the metal deposit. According to a particular embodiment, the entire surface of the support is covered by the metal deposit.

The metals, i.e. zinc and the second metal such as copper, is advantageously deposited on the support by electrodeposition.

The metal deposit comprises at least 1 wt%, notably at least 5 wt%, in particular at least 10 wt%, for example at least 20 wt%, such as at least 30 wt% of one or several phases of an alloy of zinc and of the second metal. The metal deposit can consist of 100 wt% of one or several phases of an alloy of zinc and of the second metal.

The presence of one or several phases of an alloy of zinc and of the second metal and its/their amount can be determined by X-ray diffraction.

The metal deposit has a specific surface area of at least $0.1 \ m^2.g^{-1}$, notably at least $0.5 \ m^2.g^{-1}$, such as at least $1 \ m^2.g^{-1}$. In particular, the metal deposit has a specific surface area for example comprised between 0.1 and $500 \ m^2.g^{-1}$, notably between 0.5 and $200 \ m^2.g^{-1}$, in particular between 1 and $100 \ m^2.g^{-1}$, preferably between 1 and $50 \ m^2.g^{-1}$.

The metal deposit advantageously has a thickness of between 1 $\mu$m and 250 $\mu$m, notably between 5 $\mu$m and 250 $\mu$m, preferably between 5 and 200 $\mu$m.

Such a thickness can be measured in particular by measuring a sample cut by Scanning Electron Microscopy (SEM), for example using a scanning electron microscope Hitachi S-4800.

The metal deposit will also advantageously have a porous structure.

The metal deposit will advantageously have a porosity with an average pore size of between 1 $\mu$m and 500 $\mu$m, in particular between 1 $\mu$m and 200 $\mu$m, preferably between 20 $\mu$m and 100 $\mu$m.

The average pore size can be determined by means of photographs obtained by Scanning Electron Microscopy (SEM) or Scanning Tunneling Microscopy (STM), preferably by Scanning Electron Microscopy (SEM), for example using a scanning electron microscope Hitachi S-4800.

As mentioned above, such an electrode can be used to convert $CO_2$ into syngas by electroreduction with a high selectivity, a high activity and a high stability over time.

According to a first preferred embodiment, the weight ratio zinc/second metal (e.g. Cu) in the metal deposit is comprised between 99/1 and 35/65, notably between 95/5 and 40/60. In this case, the syngas formed by $CO_2$ electroreduction has a $H_2$/CO ratio which is substantially not dependent on the applied potential, so that the syngas composition is a characteristic of the metal deposit composition. The $H_2$:CO ratio can vary from 0.2 to 1.6.

According to a second embodiment, the weight ratio zinc/second metal in the metal deposit is less than 35/65 and notably is comprised between 1/99 and 35/65. In this case, higher $H_2$:CO ratios (up to 3.65) can be obtained in the syngas formed by $CO_2$ electroreduction but this $H_2$:CO ratio will depend on the applied potential.

Such an electrode is obtainable by the method detailed below.

<u>Preparation of the electrode</u>

The present invention relates also to a process for preparing an electrode according to the invention comprising the following successive steps:

(i) providing an electrically conductive support;
(ii) immersing said electrically conductive support at least partially in an acidic aqueous solution containing ions of zinc and ions of the second metal; and
(iii) applying a current between the electrically conductive support and a second electrode, said current having a density equal to or less than $-0.1 \ A.cm^{-2}$, preferably between $-5 \ A.cm^{-2}$ and $-0.1 \ A.cm^{-2}$.

The electrode according to the present invention can thus be prepared by one step of electrodeposition.

• *Step (i)*

The electrically conductive support will be as defined above. Thus, such a support will comprise or consist of an electrically conductive material which may be a composite material consisting of several distinct electrically conductive materials. The electrically conductive material may be selected notably from a metal such as copper, steel, aluminium, zinc, titanium; a metal oxide such as titanium oxide doped with fluorine (FTO - Fluorine-doped Tin Oxide) or tin oxide doped with indium (ITO - Indium Tin Oxide); a metal sulphide such as cadmium sulphide or zinc sulphide; carbon, notably in the form of carbon felt, graphite, vitreous carbon, boron-doped diamond; a semiconductor such as silicon; and a mixture thereof.

This support may take any form suitable for use as an electrode, the person skilled in the art being able to determine the shape and dimensions of such a support according to the intended use. For example, it can be in the form of a sheet, a foil, a plate, a mesh, or a foam.

The surface of such a support is at least partially covered by the metal deposit. Advantageously, at least 5%, in particular at least 20%, especially at least 50%, preferably at least 80%, of the surface of the support is covered by the metal deposit. According to a particular embodiment, the entire surface of the support is covered by the metal deposit.

This electrically conductive support will advantageously be cleaned and polished before steps (ii) and (iii) is carried out according techniques well known to the skilled person.

• *Step (ii)*

The acidic aqueous solution containing ions of zinc and ions of the second metal to be deposited will more particularly be an acidic aqueous solution containing:

- a salt of zinc such as $ZnSO_4$, $ZnCl_2$, $Zn(ClO_4)_2$, $Zn(NO_3)_2$, $ZnBr_2$, or $Zn_3(PO_4)_2$; an oxidised zinc species such as ZnO; a $Zn(OH)^{3-}$-based salt; a $Zn(OH)_4^{2-}$-based salt; or a $ZnO_2^{2-}$-based salt; in particular it can be $ZnSO_4$;
- a salt of the second metal such as $CuSO_4$, $CuCl_2$, $Cu(ClO_4)_2$, a salt based on $Cu(OH)_4^{2-}$, AgCl, $AgNO_3$, $AgClO_3$, $Ag_2CO_3$, $Ag_3PO_4$, $AgClO_4$, $Ag_2SO_4$, AgF, $AgNO_2$, $AuBr_3$, AuCl, AuCl3, AuI, KAuCl4, HAuCl4; an oxidised species of the second metal such as $Ag_2O$, AgOH, $Au(OH)_3$; or a mixture thereof.

The acidic aqueous solution containing ions of zinc and ions of the second metal to be deposited will more particularly be an acidic aqueous solution containing:

- a salt of zinc such as $ZnSO_4$, $ZnCl_2$, $Zn(ClO_4)_2$, $Zn(NO_3)_2$, $ZnBr_2$, or $Zn_3(PO_4)_2$; an oxidised zinc species such as ZnO; a $Zn(OH)^{3-}$-based salt; a $Zn(OH)_4^{2-}$-based salt; or a $ZnO_2^{2-}$-based salt; in particular it can be $ZnSO_4$,
- a salt of copper as second metal such as $CuSO_4$, $CuCl_2$, $Cu(ClO_4)_2$, a salt based on $Cu(OH)_4^{2-}$, or a mixture thereof; in particular it can be $CuSO_4$.

The total metal ions (i.e. zinc and second metal ions) will be present in the solution advantageously at a concentration comprised between 0.1 mM and 10 M, notably comprised between 1 mM and 1 M, such as comprised between 0.05 M and 0.5 M.

The ratio zinc ions/second metal ions in the acidic solution will depend on the ratio zinc/second metal which is expected in the final electrode. With copper, the Cu:Zn ratio in the final electrode is typically 1.5 times higher than the Cu:Zn ratio present in the acidic solution.

The acid introduced into the aqueous solution may be any acid, whether organic or inorganic. It may be for example sulphuric acid, hydrochloric acid, hydrobromic acid, formic acid or acetic acid, notably sulphuric acid. Preferably, it will not be nitric acid. This acid may be present in the acidic aqueous solution advantageously at a concentration comprised between 0.1 mM and 10M, notably comprised between 10 mM and 3 M, notably between 0.1 M and 2 M, in particular between 0.5 M and 1.5 M, for example at about 0.5 M.

The acidic aqueous solution is advantageously prepared using deionized water to better control the ionic composition of the solution.

The electrically conductive support will be totally or partially immersed in the acidic aqueous solution containing the metal ions to be deposited depending on whether a deposit over the entire surface or only a part of the surface of the support is desired.

In order to obtain a deposit on only a part of the surface of the support, it may also be envisaged to apply a mask made of an insulating material on the parts of the support that should not be covered with the metal deposit. In this case, the complete support, on which the mask has been applied, may be immersed in the acidic aqueous solution containing the metal ions to be deposited. This mask will be removed from the support after the metal has been deposited.

• *Step (iii)*

In this step, the electrically conductive support will act as cathode, while the second electrode will act as anode.

The second electrode will advantageously be immersed in the acidic aqueous solution containing the metal ions to be deposited but may also be immersed in another electrolyte solution electrically connected to the first. The use of a single electrolyte solution, namely the acidic aqueous solution containing ions of zinc and ions of the second metal to be deposited, remains preferred.

The nature of the second electrode is not critical. It is only necessary for carrying out electrodeposition by an electrolysis process. It may be for example a platinum or titanium electrode.

The current applied between the electrically conductive support and the second electrode (a reductive current) has a current density equal or less than -0.1 A.cm$^{-2}$, notably between -5 A.cm$^{-2}$ and -0.1 A.cm$^{-2}$, preferably between -4 A.cm$^{-2}$ and -0.5 A.cm$^{-2}$. It may be alternating or direct, preferably direct. Alternatively, a voltage to generate an equivalent current density may be applied between the electrodes.

The current will be applied for a sufficient time to obtain the desired amount of metal deposit, notably for a duration comprised between 10 and 200 s, notably between 20 and 180 s, preferably between 30 and 160 s.

Electrodeposition will be carried out advantageously by a galvanostatic method, that is to say, by application of a constant current throughout the deposition process.

When the current is applied, several reduction reactions will occur at the cathode:

- on the one hand, the reduction of metal ions to metal in oxidation state 0 according to the following reaction with M representing Zn or the second metal and x representing its initial oxidation state:

$$M^{x+} + xe^- \rightarrow M$$

- and on the other, the reduction of protons to dihydrogen according to the following reaction:

$$2H^+ + 2e^- \rightarrow H_2$$

Similarly, an oxidation reaction will occur at the anode when the current is applied. The nature of this oxidation reaction is not crucial. This may be for example the oxidation of water.

The presence of an easily-reduced second metal aided the growth of highly porous Zn-second metal through seeding and hydrogen-evolution-assisted electrodeposition. Indeed, the second metal ions in the acidic solution triggers the growth of high surface area three-dimensional porous dendritic materials via a hydrogen-evolution-assisted electrodeposition approach, not possible with Zn alone. Thus, a dendritic Zn:second metal (e.g. Zn:Cu) foam electrode is obtained with a high nano- and meso-porosity within the Zn-based 'fern-like' structures. The incorporated copper as second metal then presents sites for hydrogen evolution in the metal deposit, while zinc present sites for CO evolution, such that $H_2$:CO ratios in the syngas obtained by $CO_2$ electroreduction using such an electrode are found to correlate directly to the second metal:Zn (Cu:Zn) ratio present in the metal deposit.

Once the current has been applied, the electrically conductive support of which at least one part of the surface is covered with a metal deposit may be removed from the solution in which it was immersed. It should be cleaned, notably with water (for example distilled water), before being dried, notably under vacuum, or under a stream of inert gas (argon, nitrogen, helium, etc.).

Electrolysis device

The present invention relates also to an electrolysis device comprising an electrode according to the present invention, as defined above.

Such an electrolysis device will include a second electrode. One electrode will act as anode where oxidation will occur, the other electrode will act as cathode where reduction will occur.

Advantageously, this device will use the electrode according to the present invention as cathode, in particular to convert $CO_2$ into syngas.

Such devices will include in particular other elements well known to the person skilled in the field of electrochemistry, such as one or more other electrodes (in particular a potential reference electrode), an energy source, a membrane, a supporting salt, a device allowing the flow of reagents, a device for collecting the gases formed, etc. However, the skilled person knows perfectly well how to make and implement such an electrochemical device.

In particular, the electrolysis device can be coupled to a source of electrical energy, such as an intermittent source of energy. It can be in particular a source of renewable electricity, more particularly an intermittent source of renewable energy, such as a photovoltaic panel or a wind turbine. However, any other source of electrical energy can be used.

**FIGURES**

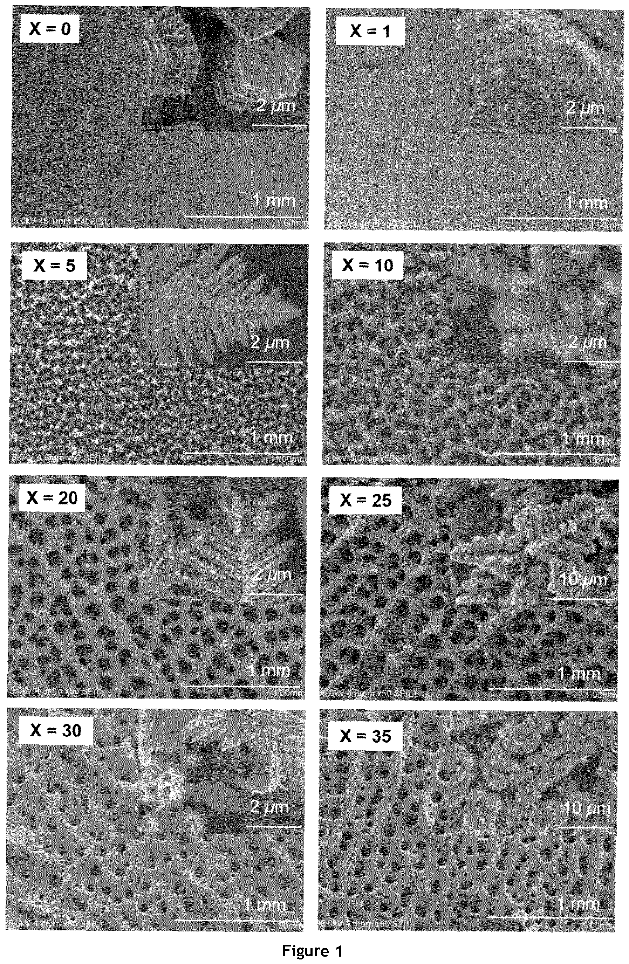

**Figure 1:** SEM images of Zn | ZnSO$_4^{(100-X)\%}$CuSO$_4^{X\%}$, where percentage of CuSO$_4$ (X) is 0, 1, 5, 10, 20, 25, 30 and 35 as indicated in the top-left corner of corresponding images.

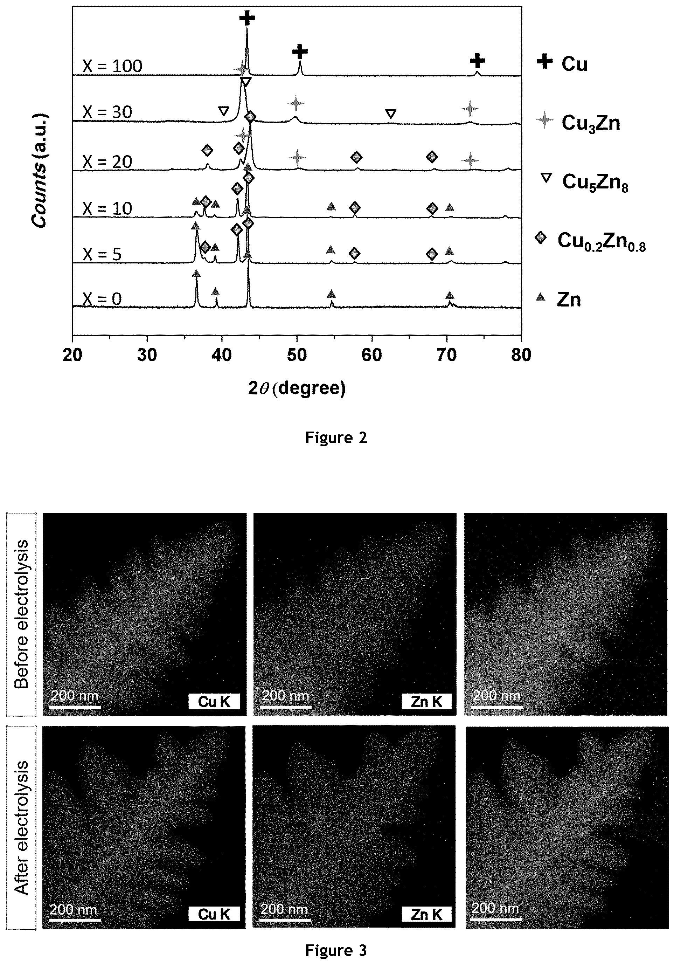

**Figure 2:** Powder X-ray diffraction patterns of Zn | ZnSO$_4^{(100-X)\%}$CuSO$_4^{X\%}$ where percentage of CuSO$_4$ (X) is varied between 0 and 100.

**Figure 3:** STEM-XEDS analysis of a Zn | ZnSO$_4^{90\%}$CuSO$_4^{10\%}$ fern-shaped structure before and after 3 h of electrolysis at - 1.0 V *vs.* RHE in CO$_2$-saturated 0.1 M CsHCO$_3$. The far-right image shows the Cu and Zn overlay.

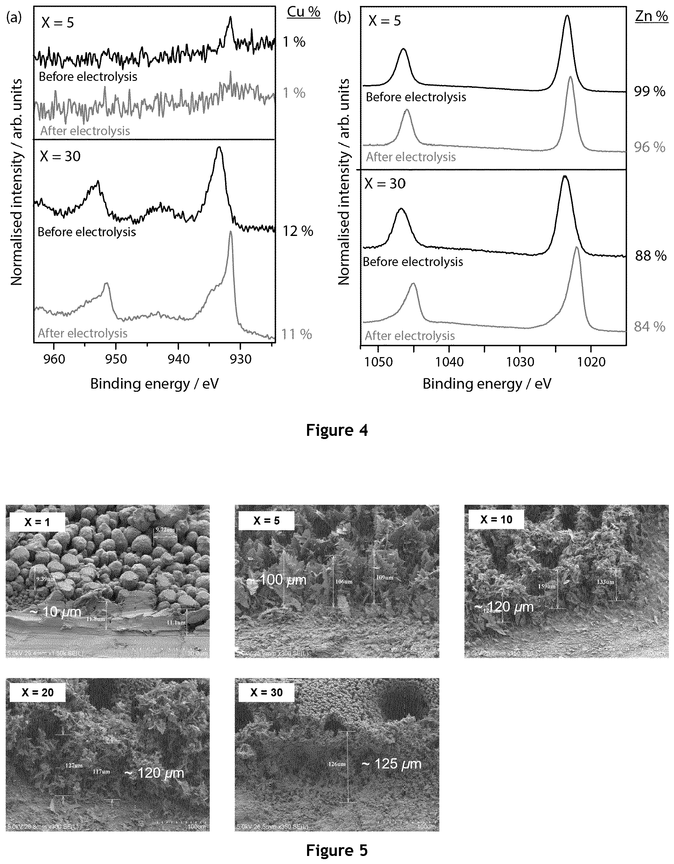

**Figure 4:** XPS analysis of Zn | ZnSO$_4^{95\%}$CuSO$_4^{5\%}$ (X = 5) and Zn | ZnSO$_4^{70\%}$CuSO$_4^{30\%}$ (X = 30) before and after 3h of electrolysis and corresponding surface Cu and Zn content. For the samples after electrolysis, the sum of Zn and Cu content is lower than 100 % as Cs was detected and accounted for the remaining part.

**Figure 5:** Thicknesses of the Zn | ZnSO$_4^{(100-X)\%}$CuSO$_4^{x\%}$ edge, X being equal to 1, 5, 10, 20 or 30 as indicated in the top-left corner of the corresponding images. The images were obtained by vertical scratching and further SEM imaging using a 45° tilt of the electrodes. The indicated distances must be multiplied by $\sqrt{2}$ to correct the angular bias of the set-up and obtain the actual thicknesses.

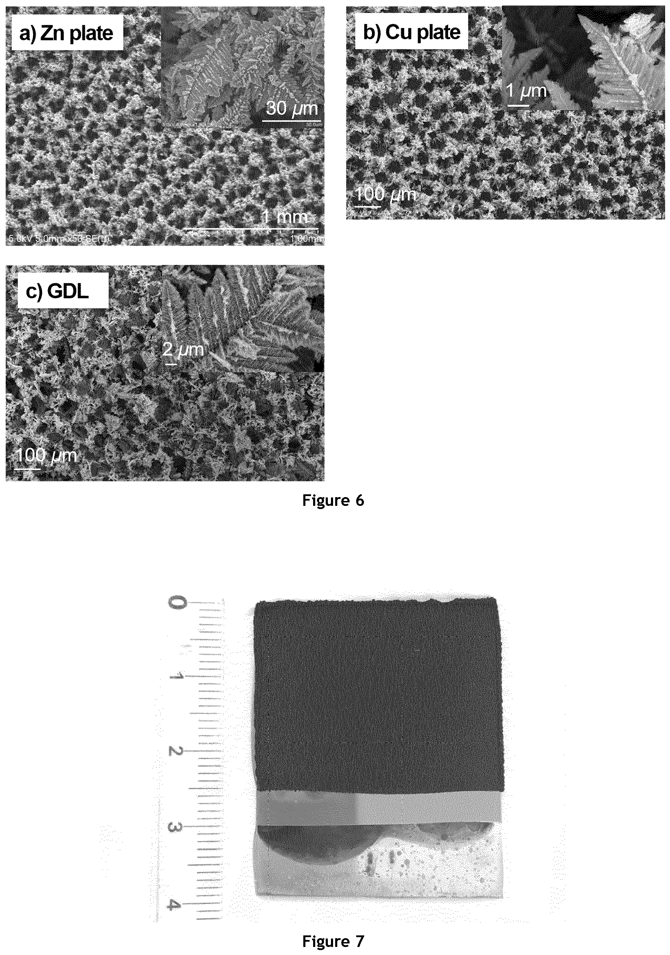

**Figure 6:** Deposition of a 0.5 M H$_2$SO$_4$ aqueous solution of 0.1 M total metal salts distributed between 10% CuSO$_4$ and 90% ZnSO$_4$ onto either (a) a 1 cm$^2$ Zn plate or (b) a 1 cm$^2$ Cu plate or (c) a GDL leading to the generation of Zn | ZnSO$_4^{90\%}$CuSO$_4^{10\%}$, Cu | ZnSO$_4^{90\%}$CuSO$_4^{10\%}$ and GDL | ZnSO$_4^{90\%}$CuSO$_4^{10\%}$ respectively.

**Figure 7:** Homogeneously-deposited 8 cm$^2$Zn | ZnSO$_4^{90\%}$CuSO$_4^{10\%}$.

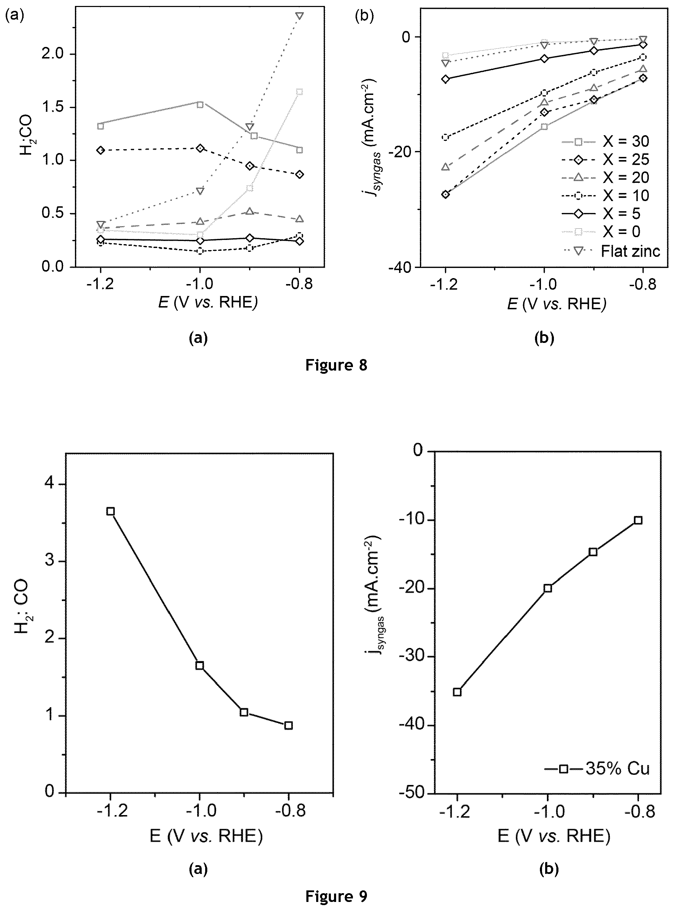

**Figure 8: (a)** Molar H$_2$:CO ratios and **(b)** corresponding total partial current densities for syngas production obtained at various potentials using Zn | ZnSO4$^{(100-X)\%}$CuSO4$^{X\%}$, where percentage of CuSO$_4$ (X) is 0, 5, 10, 20, 25 or 30, in CO$_2$-saturated 0.1 M CsHCO$_3$ at room temperature.

**Figure 9: (a)** H$_2$:CO ratios and **(b)** corresponding partial currents for syngas production ($j_{syngas}$) obtained at different potentials using Zn | ZnSO$_4^{65\%}$CuSO$_4^{35\%}$ in CO$_2$-saturated 0.1 M CsHCO$_3$ at room temperature.

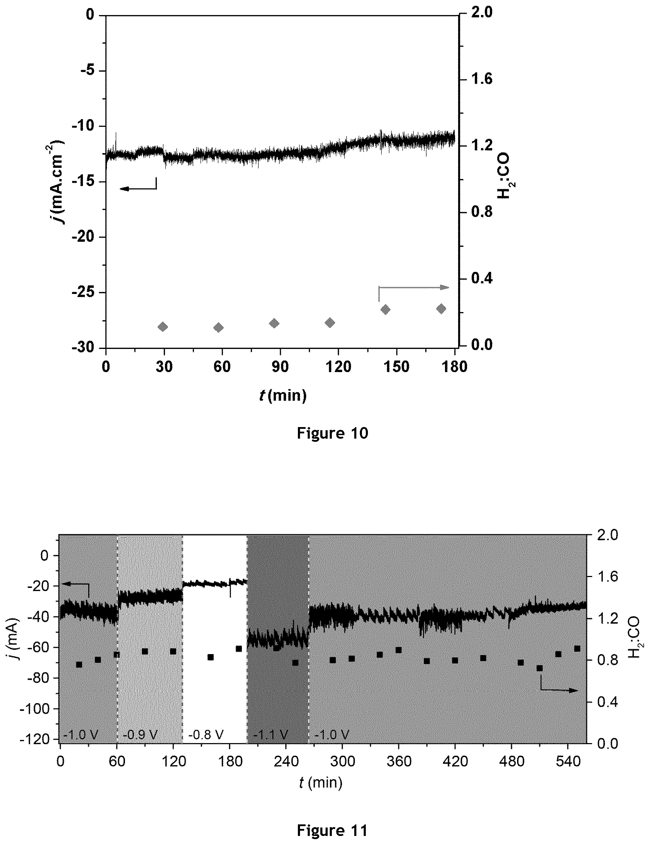

**Figure 10:** Stability of the activity and selectivity of Zn | ZnSO$_4^{90\%}$CuSO$_4^{10\%}$ operated for 3 h at -1.0 V *vs.* RHE in CO$_2$-saturated 0.1 M CsHCO$_3$ at room temperature. Symbols represent the H$_2$:CO ratio (Right axis). Minor variation after 120 min can be attributed to electrolyte composition modification, change in pH notably, justifying the change in electrolyte for longer experiment such as done in Figure 11.

**Figure 11:** Long-term electrolysis of a high surface area Zn foam | ZnSO$_4^{90\%}$CuSO$_4^{10\%}$ in CO$_2$-saturated 0.1 M CsHCO$_3$ varying the applied potential to mimic the foreseeable voltage fluctuations delivered by an intermittent renewable power source. Catalytic current is reported on the left axis and corresponding H$_2$:CO ratio on the right axis (bulk symbols).
Electrolyte was changed between each potential and roughly every hour beyond 260 minutes, causing slight signal variations.

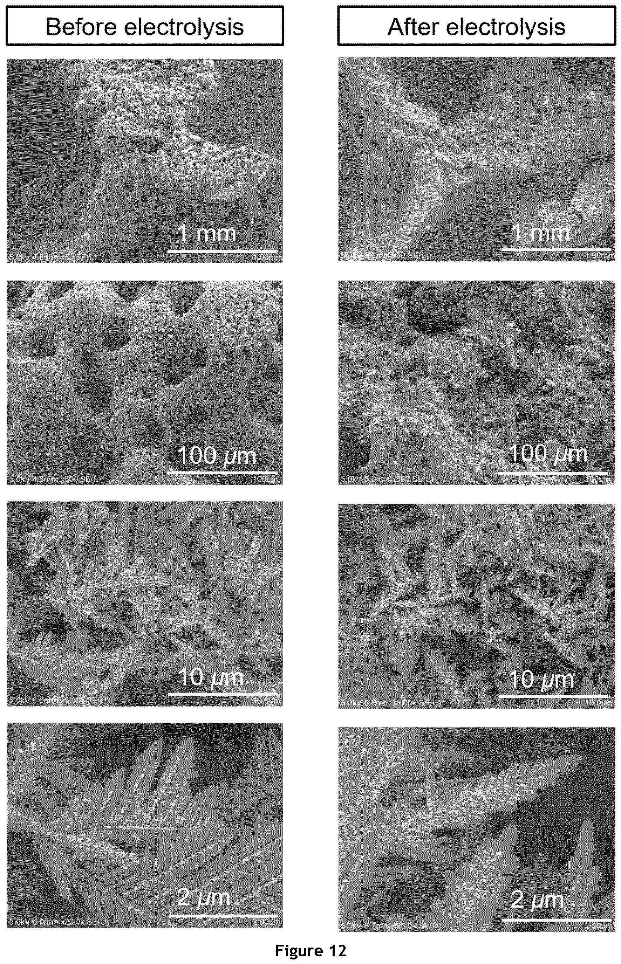

**Figure 12:** SEM images of Zn foam | ZnSO$_4^{90\%}$CuSO$_4^{10\%}$ before and after over 9 h of electrolysis at various potentials in CO$_2$-saturated 0.1 M CsHCO$_3$ at room temperature.

**Figure 13:** Faradaic efficiencies of formate production with respect to CuSO$_4$ content 'X' of the Zn | ZnSO$_4^{(100-X)\%}$CuSO$_4^{X\%}$. For each electrode tested, formate was quantified after 2 hours of controlled potential electrolysis in CO$_2$-saturated 0.1 M CsHCO$_3$ at room temperature, where potentials of -0.8, -0.9, -1.0 and -1.2 V *vs.* RHE were applied for 30 minutes each.

**Figure 14:** H$_2$:CO ratios reachable using fossil-fuel-based techniques versus the CO$_2$ electroreduction (CO$_2$eR) process presented in this work. Data for fossil-fuel-based processes are taken from Foit, S. R., I. C. Vinke, et al. (2017): "Power-to-Syngas: An Enabling Technology for the Transition of the Energy System?" Angewandte Chemie International Edition 2017, 56(20): 5402-5411. Primary syngas ratio refers to the obtained products without additional gas-shift reactions to readjust the ratio.

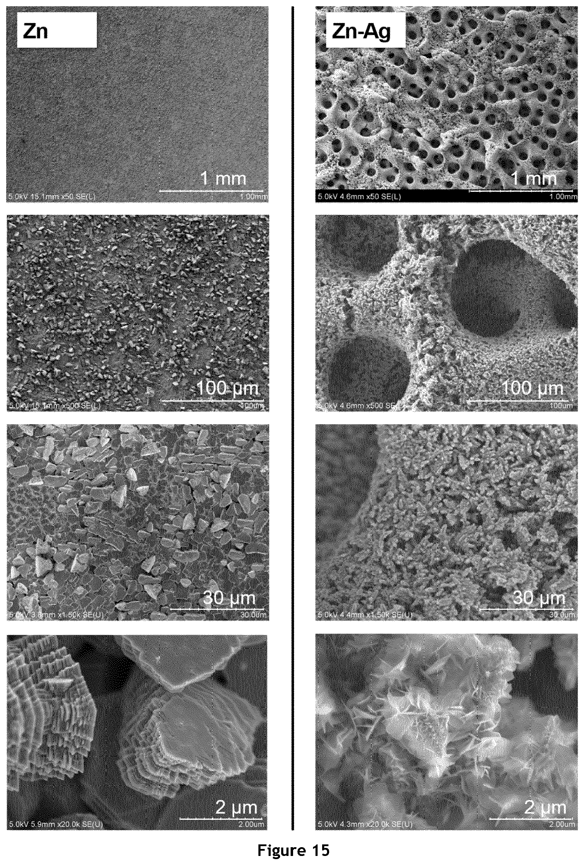

**Figure 15:** SEM images of Zn | ZnSO$_4^{(100-X)\%}$AgNO$_3^{X\%}$ where X is taken equal to 0 showing pure Zn deposit (Left column) or X is taken equal to 10 (Right column).

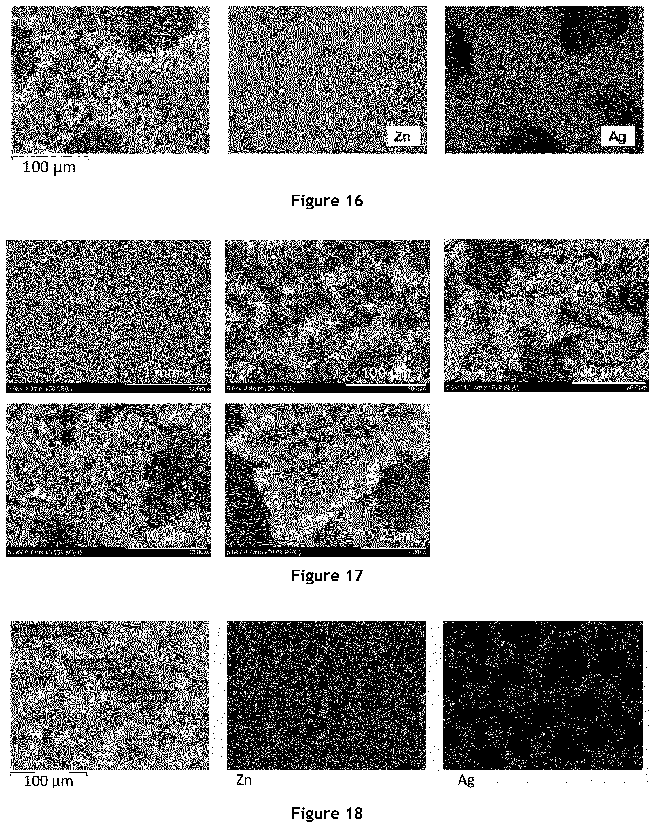

**Figure 16:** SEM image and corresponding elemental mapping showing the Zn and Ag repartition of Zn | ZnSO$_4^{90\%}$AgNO$_3^{10\%}$

**Figure 17:** SEM images at different magnifications of an electrode prepared by immersing a 1 cm$^2$ Zn plate in a 1.5 M H$_2$SO$_4$ aqueous solution of total 0.2 M metal precursor solution apportioned between 1% of AgNO$_3$ [0.002 M] and 99% ZnSO$_4$ [0.198 M] and further subjected to -4 A.cm$^{-2}$ for 30 s.

**Figure 18:** SEM image and corresponding elemental mapping showing the Zn and Ag repartition of an electrode prepared by immersing a 1 cm$^2$ Zn plate in a 1.5 M H$_2$SO$_4$ aqueous solution of total 0.2 M metal precursor solution apportioned between 1% of $AgNO_3$ [0.002 M] and 99% $ZnSO_4$ [0.198 M] and further subjected to -4 A.cm$^{-2}$ for 30 s.

## EXAMPLES

*Structure characterization*

Scanning Electron Microscopy (SEM) Imaging and EDX (Energy dispersive X-Ray spectrometry) were performed on a SU-70 Hitachi FEGSEM fitted with an X-Max 50 mm$^2$ Oxford EDX spectrometer. The imaging setup was 5 kV in order to observe surface features. Setup for quantitative analysis and mapping was 15 kV. Standards used as a reference for this voltage were purchased at Geller microanalytical laboratory (Boston, MA). Volume analyzed at this voltage is approximatively a sphere with diameter of -700 nm. This value was calculated with Single Scattering Monte Carlo Simulation. Transmission electron microscopy images and chemical maps were acquired with a Jeol 2100F microscope operated at 200 kV. Chemical maps were acquired in STEM (Scanning Transmission Electron Microscopy) mode with the same microscope, equipped with Jeol system for X-ray detection and cartography. The elemental compositions of metallic electrodes were verified with ICP-AES (Inductively Coupled Plasma - Atomic Emission Spectroscopy) in a ThermoFisher iCAP 6000 device after dissolution of the metallic structures in 20% $HNO_3$ (Sigma-Aldrich, 65%) and ICP-derived values were converted to moles.

Specific surface areas were obtained from the analysis of Kr sorption isotherms measured on a BelSorp Max set-up at 77 K. Prior to the measurement, samples were treated under vacuum at 130°C during at least 7 h. Surface areas were estimated using the BET (Brunauer, Emmett et Teller) model (Kr cross-sectional area 0.210 nm$^2$). The value derived from BET measurement, reported in m$^2$.g$^{-1}$, was also converted to cm$^2$.cm$^{-2}_{geometric}$ by multiplying it by the mass of deposited metal onto the 1 cm$^2$ flat Zn support. This provided a roughness factor (RF), as defined by the *IUPAC GoldBook*.

Powder X-ray diffraction measurements were performed in Bragg-Brentano geometry using a BRUKER D8 Advance diffractometer with Cu K$\alpha$ radiation ($\lambda$K$\alpha$1 =1.54056 Å, $\lambda$K$\alpha$2=1.54439 Å) and a Lynxeye XE detector.

XPS characterization was performed using a Thermo ESCALAB 250 X-Ray photoelectron spectrometer with a monochromatic Al-K$\alpha$ X-ray source (*hv* = 1486.6 eV) operating at a pressure around $2 \times 10^{-9}$ mbar. The analyzer pass energy was 50 eV for survey spectra and 20 eV for high-resolution spectra. The spectrometer was calibrated using Au 4f7/2 at 84.1 eV. Charging effects were not compensated during analysis. Spectra were recorded and analyzed using Thermo Avantage software version 5.966.

*Electrochemical performance testing*

Electrocatalytic measurements and constant potential electrolysis were carried out using a Bio-logic SP300 potentiostat. A H-type cell was used with the two compartments being separated by an anion exchange membrane (AMV Selemion™, ACG Engineering) with an inter-electrode distance of 6 cm between the working and Pt counter and an Ag/AgCl reference (saturated KCl) placed at 0.7 cm from the working. 0.1 M $CsHCO_3$ (Sigma-Aldrich, 99.9%) aqueous solution was used as both anolyte and catholyte, the latter being $CO_2$-saturated preceding the experiment ($CO_2$, Linde, HiQ 5.2) until the catholyte pH reached 6.8. During the electrolysis, $CO_2$ was constantly bubbled at 20 mL min$^{-1}$ through a frit at the bottom of the cathodic chamber and generated gaseous products and excess $CO_2$ were flowed to the gaseous inlet of a gas chromatograph for online measurement. All electrochemical testing experiments were carried out at room temperature.

Potentials are reported against the Reversible Hydrogen Electrode (RHE) according to the relationship *E vs. RHE = E vs.* Ag/AgCl + 0.197+0.059*pH.

*Products characterization*

$H_2$ and gaseous $CO_2$ reduction products were analyzed by a gas chromatography set-up (GC, Multi-Gas Analyzer #5 SRI Instruments) equipped with Haysep D and MoleSieve 5A columns, thermal conductivity detector (TCD) and flame ionization detector (FID) with methanizer using Argon as a carrier gas. GC was calibrated using a standard gas mixture containing 2500 ppm of $H_2$, CO, $CH_4$, $C_2H_4$, $C_2H_6$, $C_3H_6$, $C_3H_8$, $C_4H_8$ and $C_4H_{10}$ in $CO_2$ (Messer). The liquid-phase products were quantified using ionic exchange chromatography (for oxalate - 883 Basic IC, Metrohm) and Nuclear Magnetic Resonance (NMR) spectroscopy (Bruker AVANCE III 300 spectrometer).

Faradaic efficiencies (*FE*) were calculated according to the following formula:

$$FE_{product} = \frac{n_e * n_{product} * F}{Q}$$

Where $n_{product}$ [mol] is the quantity of analyzed product, $n_e$ [no unit] is the number of electrons involved in the formation of this product, $F$ is the Faraday's constant equal to 96485 C.mol$^{-1}$ and $Q$ is the corresponding passed charge. Partial current density for syngas production was calculated as follows:

$$j_{syngas} = (FE_{H2} + FE_{CO}) * j$$

where $j$ refers to the total current density [mA.cm$^{-2}$].

**Electrode general preparation**

For the construction of the highly-porous alloyed metallic foams, a solution of total 0.1 M metal salts apportioned between X% 'doping' metal salt (second metal salt) and (100-X)% 'main' metal salt (zinc salt) in 0.5 M H$_2$SO$_4$, was prepared. Then, a conductive support (S) was immersed into the so-prepared precursor solution and a - 0.5 A.cm$^{-2}$ current density was applied for 160 s using a three-electrode set-up with an Ag/AgCl (KCl sat.) reference and a 1 cm$^2$ Pt-mesh counter facing the electrodepositing electrode, with a corresponding interelectrode distance of 1 cm. In each case, the electrode was immediately rinsed with milliQ water and air-dried after deposition. These electrodes are labelled S | Main$^{(100-X)\%}$doping$^{X\%}$ in the following sections.

Unless stated otherwise, the support (S) employed for electrode preparation was a 1 cm$^2$ Zn foil (GoodFellow, 99,99+%, 1 mm) successively polished by P1200, P2400 emery paper and Al-powder followed by sonication in water before deposition. When the support employed was Cu, the same mechanical polishing procedure was applied on a 1 cm$^2$ Cu foil (GoodFellow, 99,999%, 1 mm). When the support employed was a Gas diffusion Layer (GDL- AVCarbGDS 3250, FuelCellStore), it was used as commercially available without any pre-treatment before deposition. The Zn foam (Mesh 4, Zn003811, Good Fellow) was used without any treatment previous to electrodeposition as well.

CuSO$_4$·5H$_2$O (99.9%) and H$_2$SO$_4$ (99.8%), were purchased from Sigma-Aldrich and used without further purification. ZnSO$_4$.7H$_2$O (99.5%) was purchased from Roth chemicals.

**Example 1: Preparation of a range of Zn-Cu foams**

The preparation method described in the previous section was applied to generate a range of Zn-Cu foams using ZnSO$_4$ as main metal salt and CuSO$_4$ as doping metal salt. A 1 cm$^2$ Zn plate - successively polished using P1200/P2400 grade emery paper and Al-powder before electrodeposition - was employed as the 'support' (S). The percentage of doping salt, X, was varied between 0, 1, 5, 10, 20, 25, 30 and 35 leading to the generation of 8 different electrodes labelled as follows: Zn | ZnSO$_4$$^{100\%}$CuSO$_4$$^{\%}$, Zn | ZnSO$_4$$^{99\%}$CuSO$_4$$^{1\%}$, Zn | ZnSO$_4$$^{95\%}$CuSO$_4$$^{5\%}$, Zn | ZnSO$_4$$^{90\%}$CuSO$_4$$^{10\%}$, Zn | ZnSO$_4$$^{80\%}$CuSO$_4$$^{20\%}$, Zn | ZnSO$_4$$^{75\%}$CuSO$_4$$^{25\%}$, Zn | ZnSO$_4$$^{70\%}$CuSO$_4$$^{30\%}$ and Zn | ZnSO$_4$$^{65\%}$CuSO$_4$$^{35\%}$.

**Example 2: Structure characterisation of the Zn-Cu foams**

Zn | ZnSO$_4$$^{(100-X)\%}$CuSO$_4$$^{X\%}$ were prepared as described in Example 1 with X being equal to 0, 1, 5, 10, 20, 25, 30 and 35 and their structure observed by SEM. The as-prepared electrode materials display an increasing structuration with the amount of CuSO$_4$ doping (Figure 1).

**Example 3: Elemental characterisation of the Zn-Cu foams**

Elemental composition of the electrodeposited alloys was probed by ICP-AES measurements and is presented in Table 1 below.

**Table 1.** Relationship between the CuSO$_4$ percentage in the precursor solution, the subsequent percentage of incorporated Cu either in the electrode bulk (determined by ICP-AES) or on the electrode surface (determined by XPS) and resulting electrode specific surface area (BET) and corresponding Roughness Factor (RF).

| Electrode | %CuSO$_4$ | % Cu (bulk) | % Cu (surface) | BET [m$^2$.g$^{-1}$] | RF |
|---|---|---|---|---|---|
| Zn | ZnSO$_4$$^{95\%}$CuSO$_4$$^{5\%}$ | 5 | 6.5±0.5 | 1 | 1.3 | 130 |
| Zn | ZnSO$_4$$^{90\%}$CuSO$_4$$^{10\%}$ | 10 | 13±1 | 2 | 3.8 | 350 |
| Zn | ZnSO$_4$$^{80\%}$CuSO$_4$$^{20\%}$ | 20 | 32±3 | n/d | 16.9 | 1500 |
| Zn | ZnSO$_4$$^{75\%}$CuSO$_4$$^{25\%}$ | 25 | 39.5±4 | n/d | 14.6 | 1300 |

(continued)

| Electrode | %CuSO$_4$ | % Cu (bulk) | % Cu (surface) | BET [m$^2$.g$^{-1}$] | RF |
|---|---|---|---|---|---|
| Zn \| ZnSO$_4$$^{70\%}$CuSO$_4$$^{30\%}$ | 30 | 59.3±6 | 12 | 27.4 | 2500 |

The incorporation of Cu in the materials was confirmed at each loading investigated, and ICP-AES measurements revealed that the Cu:Zn ratio in the material is typically 1.5 times higher than the CuSO$_4$:ZnSO$_4$ ratio present in the metal sulfate precursor solution, in agreement with the thermodynamically preferential reduction of Cu$^{2+}$ *vs.* Zn$^{2+}$.

X-ray diffraction analysis (XRD) was also performed to gain insight in the phase composition of the electrodes. Diffractograms for Zn \| ZnSO$_4$$^{(100-X)\%}$CuSO$_4$$^{X\%}$ electrodes confirmed the strong correlation of alloy content and the relative metal stoichiometry of the soluble precursors (Figure 2). At low loadings (X ≤ 10), the XRD patterns of the corresponding Zn \| ZnSO$_4$$^{(100-X)\%}$CuSO4$^{X\%}$ structures show hexagonal-Zn phases with slight variations of lattice parameters, suggesting a solid solution of Cu in these materials, as well as additional hexagonal phases attributed to a Cu$_{0.2}$Zn$_{0.8}$ alloy. With increasing Cu content (10 < X ≤ 30), diffraction patterns attributed to cubic Cu$_5$Zn$_8$ and Cu$_3$Zn are observed.

High Resolution TEM (HRTEM) combined with elemental mapping with Scanning Transmission Electron Microscopy-Energy-Dispersive X-ray Spectroscopy (STEM-EDXS) confirmed that homogeneous distribution of Cu and Zn was present even at the nanoscale features of the dendrite as illustrated in the typical 'fern-shaped' structure (Figures 3). Comparison of the microstructures before and after use in electrocatalytic conditions shows no change in the atomic distribution of the metal sites, demonstrating high structural stability of this surface.

X-ray Photoelectron Spectroscopy (XPS) of Zn \| ZnSO$_4$$^{(100-X)\%}$CuSO$_4$$^{X\%}$ electrodes confirms that both Cu and Zn are present at the surface of the electrode at low and high Cu loading (Table 1). The quantification of the relative Cu:Zn surface ratio indicates that the surface Cu content is around 6 times lower than the bulk Cu content determined by ICP-AES. This Cu:Zn surface ratio is unchanged before and after electrolysis (Figure 4). Also, rough quantification of the alloy content could be obtained by analysis of the XRD spectra and are summarized in the following Table 2 according to the CuSO$_4$ content in the precursor solution.

**Table 2**. Relationship between the CuSO$_4$ percentage in the precursor solution and the alloy content and composition in the deposited metal.

| X (CuSO$_4$%) | Cu$_3$Zn (%) | Cu$_5$Zn$_8$ (%) | Cu$_2$Zn$_8$ (%) | Total alloy (%) |
|---|---|---|---|---|
| 30 | 35 | 47 | - | 82 |
| 20 | 7 | 61 | 22 | 90 |
| 10 | 2,5 | - | 69 | 71.5 |
| 5 | - | - | 38 | 38 |

## Example 4: Thickness and specific surface area characterisation of the Zn-Cu foams

Zn \| ZnSO$_4$$^{99\%}$CuSO$_4$$^{1\%}$, Zn \| ZnSO$_4$$^{95\%}$CuSO$_4$$^{5\%}$, Zn \| ZnSO$_4$$^{90\%}$CuSO$_4$$^{10\%}$, Zn \| ZnSO$_4$$^{80\%}$CuSO$_4$$^{20\%}$, Zn \| ZnSO$_4$$^{70\%}$CuSO$_4$$^{30\%}$ were prepared as described in Example 1 and their surface vertically scratched with a wooden tip. An estimation of the thicknesses of the resulting surfaces was provided by SEM in each case (Figure 5). The thickness increases by about ten-fold between 1% CuSO$_4$ doping and 5% CuSO$_4$ and by twelve-fold between 1% and 10%. Beyond 10%, the thickness only increases marginally (<5% between 10% and 20%).

Higher structuration with Cu content was also confirmed by BET measurements allowing to precisely measure the Zn-Cu nanofoam specific surface areas (Table 1). Surface areas as high as 27.4 m$^2$.g$^{-1}$ were reached for the highest Cu content tested.

## Example 5: Generalization to other supports

Cu \| ZnSO$_4$$^{90\%}$CuSO$_4$$^{10\%}$ and GDL \| ZnSO$_4$$^{90\%}$CuSO4$^{10\%}$ were prepared using thoroughly polished 1cm$^2$ Cu plate (successively polished using P1200/P2400 emery paper and Al-powder) and a Gas Diffusion Layer (AVCarb GDS 3250, FuelCellStore) respectively to support the growth. As displayed in Figure 6, similar morphologies were obtained regardless of the employed conducting deposition support.

### Example 6: Scaling-up to a homogeneous 8 cm$^2$ Zn-Cu foam

A Zn | ZnSO$_4$$^{90\%}$CuSO$_4$$^{10\%}$ nanofoam was deposited onto a 8 cm$^2$ (2.5 cm x 3.2 cm) flat Zn support using the same deposition procedure as described in Example 1 and proved to be homogeneous (Figure 7).

### Example 7: Catalytic activity of the Zn-Cu foams used as cathode for CO$_2$eR

Catalytic activity of the Zn | ZnSO$_4$$^{100\%}$CuSO$_4$$^{\%}$, Zn | ZnSO$_4$$^{95\%}$CuSO$_4$$^{5\%}$, Zn | ZnSO$_4$$^{90\%}$CuSO$_4$$^{10\%}$, Zn | ZnSO$_4$$^{80\%}$CuSO$_4$$^{20\%}$, Zn | ZnSO$_4$$^{75\%}$CuSO$_4$$^{25\%}$ and Zn | ZnSO$_4$$^{70\%}$CuSO$_4$$^{30\%}$ materials used as cathodes for CO$_2$eR was assessed in the H-type cell using a 0.1 M CsHCO$_3$ supporting electrolyte in both cathodic and anodic compartments. Before experiment, the catholyte was CO$_2$-saturated and CO$_2$ was continuously bubbled at 20 mL.min$^{-1}$ during exper- iment. In terms of selectivity, the produced syngas mixture displayed an increasing H$_2$:CO ratio as the CuSO$_4$ content in the precursor solution and resulting electrode-incorporated Cu content increased (Figure 8a). H$_2$:CO ratios ranging from 0.2 to 1.6 could be achieved, extreme values being obtained using Zn | ZnSO$_4$$^{95\%}$CuSO$_4$$^{5\%}$ and Zn | ZnSO$_4$$^{70\%}$CuSO$_4$$^{30\%}$ respectively. These ratios were stable regardless of the electrolysis potential varied between -1.2 V and -0.8 V *vs.* RHE. Higher H$_2$:CO ratios (up to 3.65), in the range of those required for the methanation reaction could also be obtained when using electrodes with higher Cu loading (X > 30), yet losing the invariance of the ratio with applied potential observed at lower loadings (Figure 9).

Also, catalytic activity increased with the CuSO$_4$ doping as revealed by the measurement of catalytic current density for syngas production, $j_{syngas}$, (Figure 8b) performed in CO$_2$-saturated 0.1 M CsHCO$_3$ with continuous 20 mL.min$^{-1}$ CO$_2$ bubbling in the catholyte: for example at -1.0 V *vs.* RHE, $j_{syngas}$ obtained with Zn | ZnSO$_4$$^{100\%}$CuSO$_4$$^{0\%}$ was equal to -0.94 mA.cm$^{-2}$ in comparison with -9.8 mA.cm$^{-2}$ obtained using Zn | ZnSO$_4$$^{9\%}$CuSO$_4$$^{10\%}$, -11.5 mA.cm$^{-2}$ obtained using Zn | ZnSO$_4$$^{80\%}$CuSO$_4$$^{20\%}$ and -15.6 mA.cm$^{-2}$ obtained using Zn | ZnSO$_4$$^{70\%}$CuSO$_4$$^{30\%}$.

Stability of the system was investigated over a three-hour period in static electrolyte conditions on Zn | (Figure 10). Current density proved to be stable during the 3-hour electrolysis despite a slight decrease after 2 hours between -11 mA.cm$^{-2}$ and -10 mA.cm$^{-2}$, that might be attributed to pH gradient formation between cathode and anode and that should be solved by circulating electrolyte (an issue which is not at stake, here). The FEco also remained steady with an average value of 70.1% during the first two hours before a slight decreased to 65.3% in average for the last hour that might also be attributed to changes in the electrolyte composition. This resulted in a slight increase of the H$_2$:CO ratio from 0.12 to 0.22 over the course of the electrolysis.

### Example 8: Potential-independence of the H2:CO ratio

The stability and scalability of the electrode were finally investigated on a higher surface area support to target industrially relevant currents. Depositing onto commercially-available Zn foam (Mesh 4, 1 cm$^3$, Zn003811, Good Fellow) applying 1 A for 160 s generated a highly-structured surface referred to as Zn foam | ZnSO$_4$$^{90\%}$CuSO$_4$$^{10\%}$, similar to those deposited on flat Zn (Figure 12), and afforded stable currents in the range of -50 to -60 mA (Figure 11).

As proof of the electrode's amenability to versatile syngas production in real-world conditions, we tested its response to the potential variations commonly observed while coupling the electrolyzer to an intermittent source of energy, such as solar panels. The applied potential was varied during electrolysis with the aforementioned foam over a 300 mV range, over which time the electrode maintained a stable H$_2$:CO ratio (Figure 11). In total, the system was operated for more than 9 h without any decline in activity or selectivity, nor evidence of structural degradation as shown by the comparison of SEM images before and after electrolysis (Figure 12).

### Example 9: Turning-off the formic acid production with increasing CuSO$_4$ doping

The faradaic efficiency for formate production (typical product CO$_2$eR catalysed by monometallic Zn) was "turned-off" when increasing the CuSO$_4$ content of the precursor solution and the resulting increasing Cu content of the resulting Zn-Cu electrodes prepared as described in Example 1 (Figure 13).

### Example 10: Relevancy of the syngas production process presented herein compared to benchmarking fossil- fuel-based techniques

The electrode materials presented herein for CO$_2$ conversion to syngas are particularly relevant from two perspectives compared to existing industrial syngas production devices. First, they allow reaching a wide range of H$_2$:CO ratios ranging from 0.2 to 3.65 depending on the alloy stoichiometry which cannot be achieved by the current fossil-fuel based processes which ensure most of syngas production (Figure 14).

Also, they are particularly relevant in the context of renewable electricity conversion, which requires the design of electrolytic devices tolerant to the significant variations of power provided by intermittent energy sources, such as photovoltaic panels. To the best of our knowledge, all the electrocatalytic systems for syngas generation developed up-to-date, present a significant variation of the $H_2$:CO ratio with applied potential, preventing an efficient coupling with such sources of electricity. Herein, the developed electrodes present the unique ability to maintain a constant $H_2$:CO ratio over a broad range of applied potentials (of at least 300 mV) providing a new practical system to convert $CO_2$ to industrially relevant products using intermittent, renewable energy sources.

**Example 11: Generalisation to other alloys**

A Zn | $ZnSO_4^{90\%}AgNO_3^{10\%}$ was prepared using $ZnSO_4$ as main metal salt and $AgNO_3$ as doping metal salt, according to the procedure described in the 'Electrode General preparation' section. The as-prepared electrode exhibits a hierarchical porosity that cannot be attained with the pure Zn equivalent, also referred as Zn | $ZnSO_4^{100\%}AgNO_3^{0\%}$ (Figure 15). The presence of both Zn and Ag in the electrodeposited structure could be confirmed by EDX elemental mapping (Figure 16).

Another set of deposition conditions was tested. A 0.2 M total metal salt precursor solution was used apportioned between 1% $AgNO_3$ (*i.e.* 0.002 M) and 99% $ZnSO_4$ (*i.e.* 0.198 M) in 1.5 M $H_2SO_4$ aqueous solution. A 1 $cm^2$ Zn plate support was immersed in this solution and subjected to -4 $A.cm^{-2}$ during 30 s. The electrode was thoroughly rinsed and air-dried immediately after deposition. The as-prepared electrode showed highly nanostructured architecture as confirmed by SEM imaging (Figure 17). The presence of both Zn and Ag in the electrodeposited structure could be confirmed by EDX elemental mapping (Figure 18). These preliminary results exemplify the possible generalisation of the procedure developed herein to other alloys.

**Claims**

1. A method for converting carbon dioxide ($CO_2$) into syngas, which is a mixture of carbon monoxide (CO) and hydrogen ($H_2$), comprising the following steps:

   a) providing an electrolysis device comprising an anode and a cathode, wherein said cathode comprises an electrically conductive support of which at least a part of the surface is covered by a metal deposit of zinc and of a second metal selected from copper, silver, gold and mixtures thereof, and being preferably copper, said metal deposit comprising at least 1 wt% of one or several phases of an alloy of zinc and of the second metal;
   b) exposing the cathode of said electrolysis device to a $CO_2$-containing aqueous catholyte solution;
   c) applying an electrical current between the anode and the cathode in order to reduce the carbon dioxide into syngas.

2. The method according to claim 1, wherein the catholyte solution comprises a salt of hydrogen carbonate, such as an alkali metal salt or a quaternary ammonium salt of hydrogen carbonate, in particular a cesium, potassium, sodium, tetramethylammonium or tetraethylammonium salt of hydrogen carbonate, preferably $CsHCO_3$, which can be formed in situ by reaction of a hydroxide salt, such as KOH, with $CO_2$ contained in the catholyte solution.

3. The method according to claim 1 or 2, wherein the metal deposit has a specific surface area of at least 0.1 $m^2.g^{-1}$, for example comprised between 0.1 and 500 $m^2.g^{-1}$, notably between 0.5 and 200 $m^2.g^{-1}$, in particular between 1 and 100 $m^2.g^{-1}$, preferably between 1 and 50 $m^2.g^{-1}$; and/or
   wherein the metal deposit comprises at least 5 wt%, notably at least 10 wt%, for example at least 20 wt%, such as at least 30 wt% of one or several phases of an alloy of zinc and of the second metal; and/or
   wherein the metal deposit has a thickness comprised between 1 $\mu$m and 250 $\mu$m, notably between 5 $\mu$m and 250 $\mu$m, preferably between 5 and 200 $\mu$m; and/or
   wherein the metal deposit has a porous structure with an average pore size of between 1 $\mu$m and 500 $\mu$m, in particular between 1 $\mu$m and 200 $\mu$m, preferably between 20 $\mu$m and 100 $\mu$m.

4. The method according to any one of claims 1 to 3, wherein the weight ratio zinc/second metal in the metal deposit is comprised between 99/1 and 35/65, notably between 95/5 and 40/60.

5. The method according to any one of claims 1 to 3, wherein the weight ratio zinc/second metal in the metal deposit is less than 35/65.

6. The method according to any one of claims 1 to 5, wherein the obtained syngas is converted into saturated or unsaturated hydrocarbons, alcohols and/or aldehydes, for example by a Fischer-Tropsch reaction, a methanol synthesis, a methanation reaction, a hydroformylation or a syngas fermentation.

7. An electrode comprising an electrically conductive support of which at least a part of the surface is covered by a metal deposit of zinc and of a second metal selected from copper, silver, gold and mixtures thereof, and being preferably copper,

wherein said metal deposit comprises at least 1 wt% of one or several phases of an alloy of zinc and of the second metal and has a specific surface area greater than or equal to $0.1 \ m^2.g^{-1}$, notably greater than or equal to $0.5 \ m^2.g^{-1}$, such as greater than or equal to $1 \ m^2.g^{-1}$.

8. The electrode according to claim 7, wherein the electrically conductive support comprises an electrically conductive material selected from a metal such as copper, steel, aluminum, zinc or titanium; a metal oxide such as Fluorine-doped Titanium Oxide (FTO) or Indium Tin Oxide (ITO); a metal sulphide such as cadmium sulphide or zinc sulphide; carbon in particular in the form of carbon felt, graphite, vitreous carbon, or boron-doped diamond; a semiconductor such as silicon; and a mixture thereof.

9. The electrode according to claim 7 or 8, wherein the metal deposit has a specific surface area between 0.1 and 500 $m^2.g^{-1}$, notably between 0.5 and 200 $m^2.g^{-1}$, in particular between 1 and 100 $m^2.g^{-1}$, preferably between 1 and 50 $m^2.g^{-1}$; and

wherein the metal deposit comprises at least 5 wt%, notably at least 10 wt%, for example at least 20 wt%, such as at least 30 wt% of one or several phases of an alloy of zinc and of the second metal.

10. The electrode according to any one of claims 7 to 9, wherein the metal deposit has a thickness comprised between 1 $\mu$m and 250 $\mu$m, notably between 5 $\mu$m and 250 $\mu$m, preferably between 5 and 200 $\mu$m; and/or

wherein the metal deposit has a porous structure with an average pore size of between 1 $\mu$m and 500 $\mu$m, in particular between 1 $\mu$m and 200 $\mu$m, preferably between 20 $\mu$m and 100 $\mu$m.

11. The electrode according to any one of claims 7 to 10, wherein the weight ratio zinc/second metal in the metal deposit is comprised between 99/1 and 35/65, notably between 95/5 and 40/60.

12. A process for preparing an electrode according to any one of claims 7 to 11 comprising the following successive steps:

(i) providing an electrically conductive support;
(ii) immersing said electrically conductive support at least partially in an acidic aqueous solution containing ions of zinc and ions of the second metal; and
(iii) applying a current between the electrically conductive support and a second electrode, said current having a density equal to or less than $-0.1 \ A.cm^{-2}$, preferably between $-5 \ A.cm^{-2}$ and $-0.1 \ A.cm^{-2}$.

13. The process according to claim 12, wherein the acidic aqueous solution containing ions of zinc and ions of the second metal is an acidic aqueous solution containing:

- a salt of zinc such as $ZnSO_4$, $ZnCl_2$, $Zn(ClO_4)_2$, $Zn(NO_3)_2$, $ZnBr_2$, or $Zn_3(PO_4)_2$; an oxidised zinc species such as ZnO; a $Zn(OH)^{3-}$-based salt; a $Zn(OH)_4^{2-}$-based salt; or a $ZnO_2^{2-}$-based salt;
- a salt of the second metal such as $CuSO_4$, $CuCl_2$, $Cu(ClO_4)_2$, a salt based on $Cu(OH)_4^{2-}$, AgCl, $AgNO_3$, $AgClO_3$, $Ag_2CO_3$, $Ag_3PO_4$, $AgClO_4$, $Ag_2SO_4$, AgF, $AgNO_2$, $AuBr_3$, AuCl, AuCl3, AuI, $KAuCl_4$, $HAuCl_4$; an oxidised species of the second metal such as $Ag_2O$, AgOH, $Au(OH)_3$; or a mixture thereof.

14. An electrolysis device comprising an electrode according to any one of claims 7 to 11.

15. The electrolysis device according to claim 14, coupled to a source of an electrical energy, in particular an intermittent source of renewable energy such as a photovoltaic panel or a wind turbine.

Figure 1

Figure 2

Figure 3

**Figure 4**

**Figure 5**

Figure 6

Figure 7

(a)

(a)

(b)

(b)

Figure 8

(a)

(a)

(b)

(b)

Figure 9

Figure 10

Figure 11

Figure 12

Figure 13

Figure 14

**Figure 15**

100 µm

Zn

Ag

Figure 16

1 mm

100 µm

30 µm

10 µm

2 µm

Figure 17

Spectrum 1
Spectrum 4
Spectrum 2
Spectrum 3

100 µm

Zn

Ag

Figure 18

Europäisches
Patentamt

European
Patent Office

Office européen
des brevets

# EUROPEAN SEARCH REPORT

**Application Number**

EP 18 30 6750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | PAVEL MORENO-GARCÍA ET AL: "Selective Electrochemical Reduction of CO 2 to CO on Zn-Based Foams Produced by Cu 2+ and Template-Assisted Electrodeposition", ACS APPLIED MATERIALS & INTERFACES, vol. 10, no. 37, 23 August 2018 (2018-08-23), pages 31355-31365, XP055594419, US ISSN: 1944-8244, DOI: 10.1021/acsami.8b09894 * the whole document * | 1-15 | INV. C25B1/00 C25B1/04 C25B11/04 C25D3/02 |
| X | WO 2016/178590 A1 (OMNIDEA LDA [PT]) 10 November 2016 (2016-11-10) * the whole document * | 1-15 | |

**TECHNICAL FIELDS SEARCHED (IPC)**

C25B

The present search report has been drawn up for all claims

| Place of search | Date of completion of the search | Examiner |
|---|---|---|
| Munich | 6 June 2019 | Ritter, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 670 700 A1**

## ANNEX TO THE EUROPEAN SEARCH REPORT
## ON EUROPEAN PATENT APPLICATION NO.

EP 18 30 6750

06-06-2019

| Patent document cited in search report | Publication date | Patent family member(s) | Publication date |
|---|---|---|---|
| WO 2016178590 A1 | 10-11-2016 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FOIT et al.** *Angew. Chem. Int. Ed.,* 2017, vol. 56, 5402-5411
- **LULIANELLI et al.** *Catalysis Reviews,* 2016, vol. 58, 1-35
- **FRANCKE et al.** *Chem. Rev.,* 2018, vol. 118, 4631-4701
- **ZHENG et al.** *Adv. Mat.,* 2018
- **ELGRISHI et al.** *Chem. Sci.,* 2015, vol. 6, 2522-2531
- **KANG et al.** *Energy Environ. Sci.,* 2014, vol. 7, 4007-4012
- **WANG et al.** *ACS Catal.,* 2018, vol. 8, 7612-7620
- **LV et al.** *Adv. Funct. Mater.,* 2018
- **MARQUES MOTA et al.** *ACS Catal.,* 2018, vol. 8, 4364-4374
- **MISTRY et al.** *J. Am. Chem. Soc.,* 2014, vol. 136, 16473-16476
- **NGUYEN et al.** *ACS Sustain. Chem. Eng.,* 2017, vol. 5, 11377-11386
- **QIN et al.** *ACS Appl. Mater. Interfaces,* 2018, vol. 10, 20530-30539
- **ROSS et al.** *J. Am. Chem. Soc.,* 2017, vol. 139, 9359-9363
- **SHENG et al.** *Energy Environ. Sci.,* 2017, vol. 10, 1180-1185
- **URBAIN et al.** *Energy Environ. Sci.,* 2017, vol. 10, 2256-2266
- **HE et al.** *Adv. Mat.,* 2018, vol. 30, 1705872
- **HORI, Y.** Modern Aspects of Electrochemistry. Springer, 2008, 89-189
- **REN et al.** *ACS Catal.,* 2016, vol. 6, 8239-8247
- **MORENO-GARCIA et al.** *ACS Appl. Mater. Interfaces,* 2018, vol. 10, 31355-31365
- **Y. HORI.** Modern Aspects of Electrochemistry. Springer, 2008, 89-189
- Power-to-Syngas: An Enabling Technology for the Transition of the Energy System?. **FOIT, S. R. ; I. C. VINKE et al.** Angewandte Chemie International Edition 2017. 2017, vol. 56, 5402-5411